# EUROPEAN PATENT SPECIFICATION

(11) **EP 2 747 949 B1**
(45) Date of publication and mention of the grant of the patent: **01.11.2017**
(21) Application number: 11871729.7
(22) Date of filing: 26.08.2011
(51) Int. Cl.: B25F 5/02, A01G 3/06, B23D 57/02, B27B 17/02, B28D 1/08

(54) **Portable handheld power tool**
Elektrisches Handwerkzeug
Outil electrique portatif

(43) Date of publication of application: 02.07.2014
(73) Proprietor: Husqvarna AB, 561 82 Huskvarna (SE)
(72) Inventor: SVENNUNG, Johan, SE-554 23 Jönköping (SE); BERGQUIST, Oskar, S-561 35 Huskvarna (SE); RIEF, Joachim, 88422 Alleshausen (DE); RUDOLF, Peter, 89250 Senden (DE)
(86) International application number: PCT/SE2011/051028
(87) International publication number: WO 2013/032372

(56) References cited:
- US-A1- 2009 145 621
- US-A1- 2009 145 621
- US-A1- 2010 218 385
- US-B2- 7 252 904
- US-B2- 7 252 904
- US-B2- 7 969 116
- US-B2- 7 969 116

## Description

### TECHNICAL FIELD

This invention relates to a portable handheld power tool according to the preamble of claim 1. US 7 969 116 B2 discloses such portable handheld power tool according to the preamble of claim 1.

### BACKGROUND OF THE INVENTION

Battery driven hand held power tools, such as chain saws and hedge trimmers are well known in the art.

During operation of a battery driven tool, heat is produced in the motor as well as in the battery. The more powerful the motor and battery are, the more heat is produced. The heat has to be evacuated from the tool.

In order to satisfy demanding consumers and professional users, the tools need powerful motors and high capacity batteries. In such tools, a lot of heat will be produced. Accordingly, there is a need for an arrangement for cooling battery driven power tools in an efficient way. The arrangement should be light-weight and require little space, and preferably possible to manufacture at a low cost.

### SUMMARY OF THE INVENTION

It is the object of the present invention to provide a portable handheld power tool according to claim 1 in which heat producing and sensitive components are efficiently cooled during operation. According to the invention as disclosed in claim 1, this object is achieved by means of a portable handheld power tool comprising a housing, an electric motor accommodated in the housing, which electric motor is arranged to drive a working tool of the power tool. A battery pack is detachably connected to the housing, which battery pack is arranged to provide electric power to the motor. A cooling fan is accommodated in the housing. The cooling fan has a fan wheel and a plurality of blades, and is arranged to generate a flow of air through an air current channel defined by the housing and components therein. The air current channel guides the flow of air such that it passes by the motor and through the battery pack, so as to cool the motor and the battery pack, wherein the cooling fan is arranged to suck air from an outside of the housing and to push air through the air current channel so as to generate an overpressure within the housing when the fan is rotating, whereby the overpressure minimizes the risk of dust and other particles getting into the housing through leaking portions of the housing, wherein an air inlet is provided next to the fan. Since the same fan is used for cooling the motor as the battery pack, an efficient way of cooling these components is achieved. Since the air current flows through the battery pack battery, battery cells arranged therein are efficiently cooled. Thanks to the efficient cooling the motor as well as the battery pack, these components may be of high capacity, even though such high capacity components might produce a considerable amount of heat during operation of the tool.

According to an embodiment of the solution, the power tool furthermore comprises a control unit, disposed in the housing, which control unit is arranged to control a flow of electric current to the motor. The control unit is disposed within the housing such that the flow of air generated by the cooling fan also passes by the control unit, so as to cool the control unit. By using one single fan for cooling all these three components, an even more efficient and cost efficient cooling solution is achieved.

According to another embodiment of the solution, the fan wheel of the cooling fan is fixed to a rotation axle of the motor. Thereby, the fan will rotate with the motor, and a rotation that is already present is used to generate a flow of air. This is a simple and cost efficient solution which requires little space.

According to yet another embodiment the cooling fan is arranged to suck air from an outside of the housing and to push air through the air current channel. In that way an adequate flow of air is generated. Since the fan "pushes" air into the housing, an overpressure is created within the housing when the fan is rotating. Such an overpressure minimizes the risk of dust and other particles getting into the housing through leaking portions of the housing. The only way air can enter the housing is through the air inlets provided in the housing, next to the fan. A filter may be arranged next to the air inlet, so as to minimize the risk of dust and other particles this way.

According to another embodiment, the battery pack is arranged within the housing so as to allow the cooling air current to flow from a bottom to a top of the battery pack. This configuration might have a positive effect on the air flow, since the air current, which is heated by the motor, control unit and battery, will spontaneously rise towards an upper end of the battery.

According to another embodiment, the fan has at least 12 blades connected to the fan wheel. According to another embodiment, the fan has at least 15 blades connected to the fan wheel. Such relatively large number of fan blades is profitable in order to generate a high air pressure by means of the fan.

According to an embodiment, the blades are angled relative to a main extension plane of the fan wheel by at least 20 degrees. Such a relatively aggressive angle is profitable in order to generate a high air pressure by means of the fan.

According to an embodiment the blades are angled relative to a main extension plane of the fan wheel by 20-40 degrees.

According to an embodiment, the blades are angled relative to a main extension plane of the fan wheel by 33-39 degrees.

According to another embodiment the battery pack is arranged within the housing downstream of the motor such that the cooling air passes the motor before the battery pack. This is a simple and cost-efficient solution, since it is simple to connect the fan to the motor.

According to an embodiment, the cooling fan is an axial fan. Thereby, the air current will flow in the direction of the shaft about with the fan wheel rotates. Accordingly the loss of flow is reduced as compared to if a radial fan would have been used.

According to an embodiment the power tool is a chain saw. Since chain saws generally require high capacity batteries and motors, the efficient cooling achieved by means of the embodiments herein is highly profitable for chain saws.

### DEFINITIONS

As used herein the following terms have the following meanings:
The terms downwards, upwards, bottom and top are defined based on a horizontal support surface on which the tool may be positioned.

### BRIEF DESCRIPTION OF THE DRAWINGS

The invention will be understood and appreciated more fully from the following detailed description, taken in conjunction with the drawings, in which:
Fig. 1a is a partial perspective view of top handle chain saw according to an embodiment of the invention,
Fig. 1b is a cross section of the chain saw shown in Fig. 1 a,
Fig. 2a is a perspective view of a fan wheel and fan blades according to an embodiment of the invention,
Fig. 2b is a side view of a fan wheel of Fig. 2a,
Fig. 2c is a top view of the fan wheel of Figs 2a and 2b,
Fig. 3 is a schematic cross sectional view of a chain saw housing, showing a flow of air passing by the motor and the control unit.
Fig. 4 is a schematic cross sectional view illustrating a flow of air passing by the motor and further through the battery pack.
Fig. 5 is a schematic flow chart, showing a flow of air through a chain saw housing.

### DESCRIPTION OF PREFERRED EMBODIMENTS

The present invention will be described more fully hereinafter with reference to the accompanying drawings, in which preferred embodiments of the invention are shown. The invention may, however, be embodied in many different forms and should not be construed as limited to the embodiments set forth herein; rather these embodiments are provided so that this disclosure will be thorough and complete, and will fully convey the scope of the invention to those skilled in the art. In the drawings, like numbers refer to like elements.

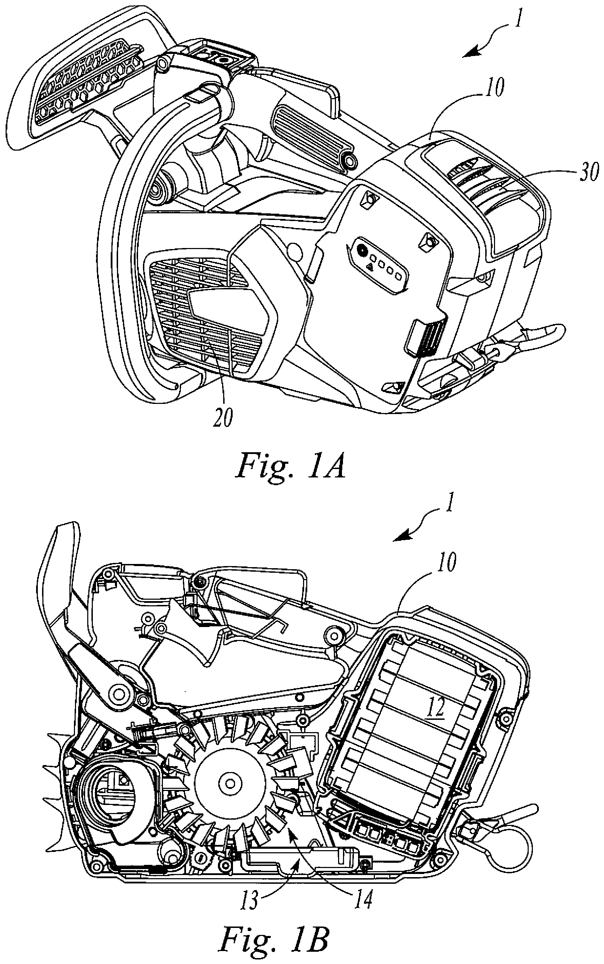

Referring to Fig. 1a, a major part of a battery powered handheld power tool embodied as a chain saw is shown. The working tool of the chain saw, i.e. the saw chain and the chain supporting guide bar, is omitted in Fig. 1 a.

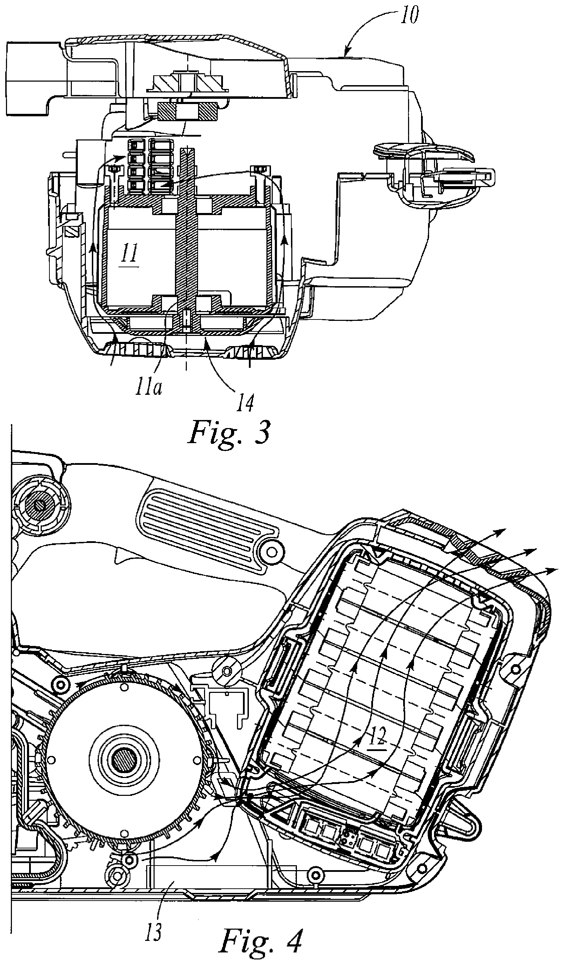

The chain saw has a housing 10 in which an electric motor 11, arranged to drive the saw chain, is accommodated. A schematic sectional view of the motor is shown in Fig. 3.

The motor may be a BLDC motor.

Other types of electric motors are also possible, such as a PMDC motor.

In the case of a battery driven chain saw, the power of the motor is preferably at least 500 W.

A fan wheel 14a of an axial fan 14 is fixed to the rotation axle 11a or shaft 11a of the motor 11. The fan wheel 14a rotates with the motor 11 to produce an air current to cool the motor 11.

In the power tool 1 shown in the figures herein, a motor housing defines a closed casing, and the air current passes on an outside of this casing.

When the fan wheel rotates, it sucks air from the outside of the housing, through air inlets 20, and pushes the air towards the motor such that the motor is cooled.

In the embodiment shown in Fig. 3, a control unit 13 is arranged in the vicinity of the motor 11. The control unit is arranged to control the flow of electric current provided to the motor.

When the cooling air has passed the motor, it is guided so as to pass by the control unit, such that the control unit is also cooled.

The different components inside the housing are positioned relative each other and the housing such that an air guiding channel is defined, which air guiding channel guides the air via the motor 11, further via the control unit 13, and further towards a battery pack 12.

In the embodiments shown in the figures herein, the battery pack is arranged in the housing, and is positioned relative to the housing 10 and relative to other components in the housing 10, such that the only way the air current may escape from the housing is through the battery pack 12.

In one end the battery pack there are air inlets formed, so as to let the air current arriving from the motor and the control unit in. In the opposite end of the battery pack, air outlets are provided. These outlets are in fluid communication with air outlets 30 provided in the housing, such that the air current may escape from the housing through the housing outlets 30.

In the embodiment shown in Fig. 1b, the battery pack is arranged within the housing such that the air inlets of the battery pack are provided in a bottom wall of the battery, and such that the air outlets of the battery pack are provided in a top wall of the battery.

This configuration might have a positive effect on the air flow, since the air current, which is heated by the motor, control unit and battery, will spontaneously rise towards an upper end of the battery.

The battery pack is not necessarily completely enclosed by the housing. In the embodiment shown in Fig. 1a, the battery pack is inserted into a transversal through hole defined by the housing, and is enclosed by the housing on four sides only. However, the only way the air current created by the fan can escape from the housing to the outside is via the battery pack. When the battery pack is inserted in the through hole, the air inlets provided in the lower end of it will match with outlets provided in one of the housing walls surrounding the through hole. Correspondingly, the air outlets provided in the upper end of the battery pack will match with air inlets provided in another one of the housing walls surrounding the through hole. These inlets in a housing wall surrounding the through hole are in fluid communication with the housing air outlets 30, so as to allow the air current to flow from the battery pack, further through a portion of the housing arranged above the battery pack, and out to the surroundings. In this way, it is secured that the only way the air current can find its way to the surroundings of the housing is through the battery pack.

According to other possible embodiments, the battery pack may be connected to the housing in one end only, in a way securing that the cooling air current has to pass through the battery pack in order to find its way out to the surroundings.

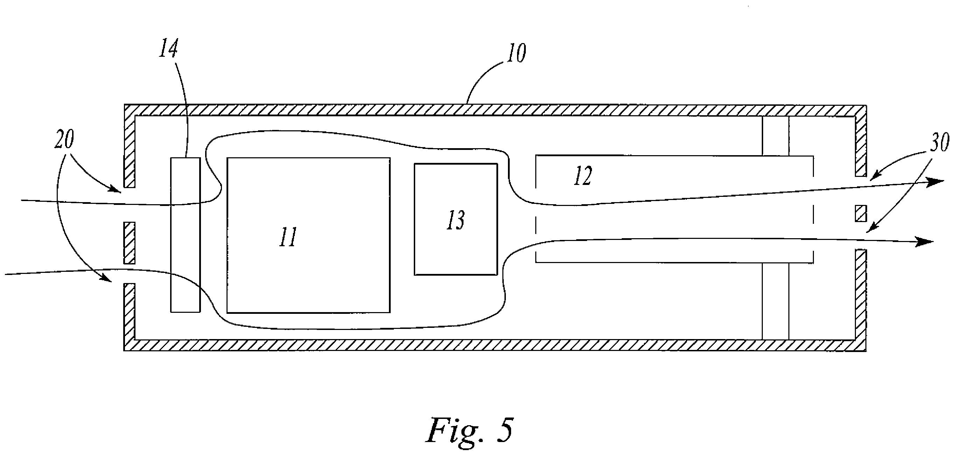

Fig. 5 is a schematic view of a flow of air through a chain saw housing, according to an embodiment of the invention.

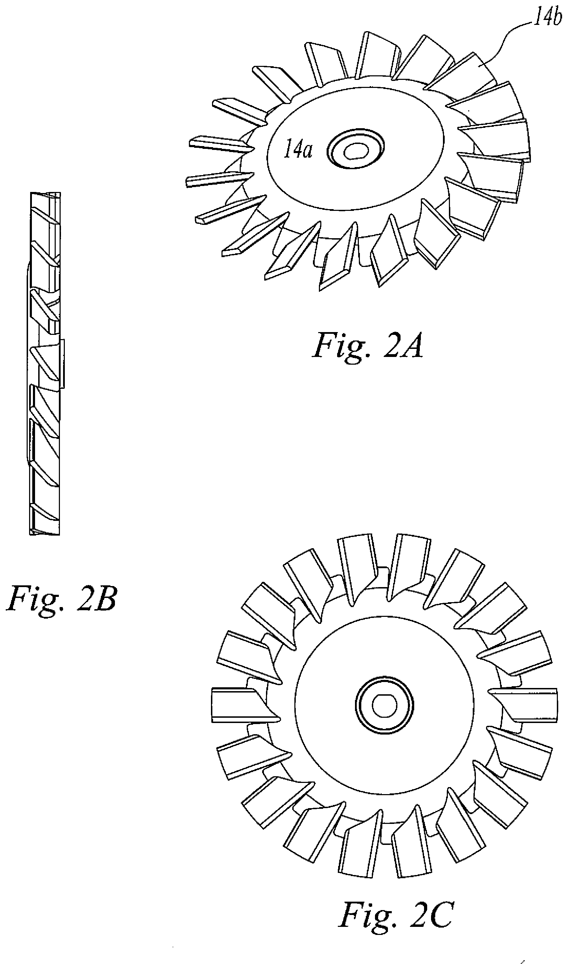

According to the embodiment shown in Figures 1b and 2a-2c, the fan is an axial fan. This means that it forces air to move in parallel to the shaft 11a about which the fan wheel and blades rotate. When the fan is fixed to the rotation shaft of the motor, air will flow in an axial direction of the motor, along the sides of the motor. In that way, an efficient cooling of the motor is achieved.

The fan wheel has a main extension plane which is parallel to the plane of the paper in Figs. 1 band 2c.

Fan blades 14b are arranged around a periphery of the fan wheel. It has been noticed that a relatively large number of fan blades is advantageous in order to provide a suitable air pressure as the fan wheel and blades rotate..

The number of fan blades is preferably more than 12, and more preferably more than 15.

In the embodiment shown in Figs. 2a-2c, 18 fan blades are arranged around the fan wheel.

It has been noticed that arranging the fan blades such that they are inclined relative to the main extension plane of the fan wheel by a relatively aggressive angle might be advantageous. An inclination angle of about 33-39 degrees to could be particularly beneficial.

In the embodiment shown in Figs. 2a-2c, the inclination angle of the fan blades relative to the main extension plane of the fan wheel is about 36 degrees.

As the fan wheel rotates, an overpressure is created within the tool housing. Such an overpressure minimizes the risk of dust and other particles getting into the housing through leaking portions of the housing. The only way air can enter the housing is through the air inlets 20 provided in the housing, next to the fan. A filter may be arranged next to the air inlet, so as to minimize the risk of dust and other particles this way.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A portable handheld power tool comprising
a housing (10);
an electric motor (11) accommodated in the housing (10), which electric motor (11) is arranged to drive a working tool of the power tool (1);
a battery pack (12) detachably connected to the housing, which battery pack (12) is arranged to provide electric power to the motor (11);
a cooling fan (14) accommodated in the housing, the cooling fan (14) having a fan wheel (14a) and a plurality of blades (14b), wherein the cooling fan (14) is arranged to generate a flow of air through an air current channel defined by the housing and components therein, which air current channel guides the flow of air such that it passes by the motor (11) and through the battery pack (12), so as to cool the motor (11) and the battery pack (12), **characterized in that** the cooling fan is arranged to suck air from an outside of the housing and to push air through the air current channel so as to generate an overpressure within the housing when the fan is rotating, whereby the overpressure minimizes the risk of dust and other particles getting into the housing through leaking portions of the housing, wherein the air inlet is provided next to the fan (14).

2. The portable handheld power tool according to claim 1 wherein a filter is arranged next to the air inlet, so as to minimize the risk of dust and other particles entering the housing.

3. The portable handheld power tool according to claim 1, which power tool furthermore comprises
a control unit (13), disposed in the housing (10), which control unit (13) is arranged to control a flow of electric current to the motor (11);
wherein the control unit (13) is disposed within the housing (10) such that the flow of air generated by the cooling fan (14) also passes by the control unit, so as to cool the control unit.

4. The portable handheld power tool according to claim 1, wherein the fan wheel (14a) of the cooling fan (14) is fixed to a rotation axle (11a) of the motor (11).

5. The portable handheld power tool according to any of the preceding claims, wherein the battery pack is arranged within the housing so as to allow the cooling air current to flow from a bottom to a top of the battery pack, when the power tool is in a normal working position.

6. The portable handheld power tool according to any of the preceding claims, wherein the fan (14) has at least 12 blades (14b) connected to the fan wheel (14a).

7. The portable handheld power tool according to any of the preceding claims, wherein the fan (14) has at least 15 blades (14b) connected to the fan wheel (14a).

8. The portable handheld power tool according to any of the preceding claims, wherein the blades are angled relative to a main extension plane of the fan wheel by at least 20 degrees.

9. The portable handheld power tool according to any of the preceding claims, wherein the blades are angled relative to a main extension plane of the fan wheel by 20-40 degrees.

10. The portable handheld power tool according to any of the preceding claims, wherein the blades are angled relative to a main extension plane of the fan wheel by 33-39 degrees.

11. The power tool according to any of the preceding claims, wherein the battery pack (12) is arranged within the housing downstream of the motor (11) such that the cooling air passes the motor before the battery pack.

12. The portable handheld power tool according to any of the preceding claims, wherein the cooling fan is an axial fan.

13. The portable handheld power tool according to any of the preceding claims, which power tool is a chain saw.

14. The portable handheld power tool according to any of the preceding claims, which power tool is a top handle chain saw.

15. The portable handheld power tool according to any of the preceding claims, which power tool is a rear handle chain saw.

## Patentansprüche

1. Tragbares Handwerkzeug (1), umfassend
ein Gehäuse (10);
einen Elektromotor (11), der in dem Gehäuse (10) untergebracht ist, wobei der Elektromotor (11) angeordnet ist, um ein Arbeitswerkzeug des Handwerkzeugs (1) anzutreiben;
ein Batteriepaket (12), das lösbar mit dem Gehäuse verbunden ist, wobei das Batteriepaket (12) angeordnet ist, um elektrische Leistung an den Motor (11) zu liefern;
ein Kühlgebläse (14), das in dem Gehäuse untergebracht ist, wobei das Kühlgebläse (14) ein Gebläserad (14a) und eine Vielzahl von Schaufeln (14b) aufweist, wobei das Kühlgebläse (14) so angeordnet ist, dass es einen Luftstrom durch einen Luftströmungskanal erzeugt, der durch das Gehäuse und Komponenten darin definiert wird, wobei der Luftströmungskanal den Luftstrom so führt, dass er an dem Motor (11) vorbei und durch das Batteriepaket (12) strömt, um den Motor (11) und das Batteriepaket (12) zu kühlen,
**dadurch gekennzeichnet, dass** das Kühlgebläse so angeordnet ist, dass es Luft von einer Außenseite des Gehäuses einsaugt und Luft durch den Luftströmungskanal drückt, um einen Überdruck innerhalb des Gehäuses zu erzeugen, wenn das Gebläse sich dreht, wobei der Überdruck das Risiko des Eindringens von Staub und anderen Partikeln in das Gehäuse durch undichte Teile des Gehäuses minimiert, wobei der Lufteinlass neben dem Gebläse (14) angeordnet ist.

2. Tragbares Handwerkzeug nach Anspruch 1, wobei ein Filter neben dem Lufteinlass angeordnet ist, um das Risiko des Eindringens von Staub und anderen Partikeln in das Gehäuse zu minimieren.

3. Tragbares Handwerkzeug nach Anspruch 1, wobei das Handwerkzeug ferner eine Steuereinheit (13) umfasst, die in dem Gehäuse (10) angeordnet ist, wobei die Steuereinheit (13) so angeordnet ist, dass sie einen Fluss von elektrischem Strom zu dem Motor (10) steuert;
wobei die Steuereinheit (13) innerhalb des Gehäuses (10) so angeordnet ist, dass der Luftstrom, der durch das Kühlgebläse (14) erzeugt wird, auch die Steuereinheit passiert, um so die Steuereinheit zu kühlen.

4. Tragbares Handwerkzeug nach Anspruch 1, wobei das Gebläserad (14a) des Kühlgebläses (14) an einer Drehachse (11a) des Motors (11) fixiert ist.

5. Tragbares Handwerkzeug nach einem der vorhergehenden Ansprüche, wobei das Batteriepaket innerhalb des Gehäuses so angeordnet ist, dass es den Luftstrom von einer Unterseite zu einer Oberseite des Batteriepakets strömen lässt, wenn das Handwerkzeug sich in einer normalen Arbeitsstellung befindet.

6. Tragbares Handwerkzeug nach einem der vorhergehenden Ansprüche, wobei das Gebläse (14) zumindest 12 Schaufeln (14b) aufweist, die mit dem Gebläserad (14a) verbunden sind.

7. Tragbares Handwerkzeug nach einem der vorhergehenden Ansprüche, wobei das Gebläse (14) zumindest 15 Schaufeln (14b) aufweist, die mit dem Gebläserad (14a) verbunden sind.

8. Tragbares Handwerkzeug nach einem der vorhergehenden Ansprüche, wobei die Schaufeln relativ zu einer Hauptverlaufsebene des Gebläserades um zumindest 20 Grad abgewinkelt sind.

9. Tragbares Handwerkzeug nach einem der vorhergehenden Ansprüche, wobei die Schaufeln relativ zu einer Hauptverlaufsebene des Gebläserades um 20 bis 40 Grad abgewinkelt sind.

10. Tragbares Handwerkzeug nach einem der vorhergehenden Ansprüche, wobei die Schaufeln relativ zu einer Hauptverlaufsebene des Gebläserades um 33 bis 39 Grad abgewinkelt sind.

11. Handwerkzeug nach einem der vorhergehenden Ansprüche, wobei das Batteriepaket (12) innerhalb des Gehäuses stromabwärts des Motors (11) angeordnet ist, so dass die Kühlungsluft den Motor vor dem Batteriepaket durchströmt.

12. Tragbares Handwerkzeug nach einem der vorhergehenden Ansprüche, wobei das Kühlgebläse ein Axialgebläse ist.

13. Tragbares Handwerkzeug nach einem der vorhergehenden Ansprüche, wobei das Handwerkzeug eine Kettensäge ist.

14. Tragbares Handwerkzeug nach einem der vorhergehenden Ansprüche, wobei das Handwerkzeug eine Obergriff-Kettensäge ist.

15. Tragbares Handwerkzeug nach einem der vorhergehenden Ansprüche, wobei das Handwerkzeug eine Kettensäge mit hinterem Handgriff ist.

## Revendications

1. Outil électrique à main portatif comprenant :
un boîtier (10) ;
un moteur électrique (11) reçu dans le boîtier (10), lequel moteur électrique (11) est agencé pour entraîner un outil de travail de l'outil électrique (1) ;
un bloc-batterie (12) relié de manière amovible au boîtier, lequel bloc-batterie (12) est agencé pour fournir une alimentation électrique au moteur (11) ;
un ventilateur (14) reçu dans le boîtier, le ventilateur (14) ayant une roue de ventilateur (14a) et une pluralité de pales (14b), dans lequel le ventilateur (14) est agencé pour générer un flux d'air à travers un canal de courant d'air défini par le boîtier et des composants dedans, lequel canal de courant d'air guide le flux d'air de sorte qu'il passe par le moteur (11) et à travers le bloc-batterie (12), de manière à refroidir le moteur (11) et le bloc-batterie (12), **caractérisé en ce que** le ventilateur est agencé pour aspirer l'air à partir d'une partie extérieure du boîtier et pour pousser l'air à travers le canal de courant d'air de manière à générer une surpression dans le boîtier lorsque le ventilateur tourne, moyennant quoi la surpression réduit au minimum le risque de poussière et d'autres particules qui pénètrent dans le boîtier à travers des parties de fuite du boîtier, dans lequel l'entrée d'air est prévue à proximité du ventilateur (14).

2. Outil électrique à main portatif selon la revendication 1, dans lequel un filtre est agencé à proximité de l'entrée d'air, de manière à réduire au minimum le risque de poussière et d'autres particules entrant dans le boîtier.

3. Outil électrique à main portatif selon la revendication 1, lequel outil électrique comprend en outre :
une unité de commande (13), disposée dans le boîtier (10), laquelle unité de commande (13) est agencée pour commander un flux de courant électrique vers le moteur (11) ;
dans lequel l'unité de commande (13) est disposée à l'intérieur du boîtier (10) de sorte que le flux d'air généré par le ventilateur (14) passe également par l'unité de commande de manière à refroidir l'unité de commande.

4. Outil électrique à main portatif selon la revendication 1, dans lequel la roue de ventilateur (14a) du ventilateur (14) est fixée à un axe de rotation (11a) du moteur (11).

5. Outil électrique à main portatif selon l'une des revendications précédentes, dans lequel le bloc-batterie est agencé à l'intérieur du boîtier de manière à permettre au courant d'air de refroidissement de s'écouler d'une partie inférieure à une partie supérieure du bloc-batterie, lorsque l'outil électrique est dans une position de travail normal.

6. Outil électrique à main portatif selon l'une des revendications précédentes, dans lequel le ventilateur (14) présente au moins 12 pales (14b) reliées à la roue de ventilateur (14a).

7. Outil électrique à main portatif selon l'une des revendications précédentes, dans lequel le ventilateur (14) présente au moins 15 pales (14b) reliées à la roue de ventilateur (14a).

8. Outil électrique à main portatif selon l'une des revendications précédentes, dans lequel les pales sont inclinées par rapport à un plan d'extension principal de la roue de ventilateur d'au moins 20 degrés.

9. Outil électrique à main portatif selon l'une des revendications précédentes, dans lequel les pales sont inclinées par rapport à un plan d'extension principal de la roue de ventilateur de 20 à 40 degrés.

10. Outil électrique à main portatif selon l'une des revendications précédentes, dans lequel les pales sont inclinées par rapport à un plan d'extension principal de la roue de ventilateur de 33 à 39 degrés.

11. Outil électrique à main portatif selon l'une des revendications précédentes, dans lequel le bloc-batterie (12) est agencé à l'intérieur du boîtier en aval du moteur (11) de sorte que l'air de refroidissement traverse le moteur avant le bloc-batterie.

12. Outil électrique à main portatif selon l'une des revendications précédentes, dans lequel le ventilateur est un ventilateur axial.

13. Outil électrique à main portatif selon l'une des revendications précédentes, lequel outil électrique est une scie à chaîne.

14. Outil électrique à main portatif selon l'une des revendications précédentes, lequel outil électrique est une scie à chaîne à poignée supérieure.

15. Outil électrique à main portatif selon l'une des revendications précédentes, lequel outil électrique est une scie à chaîne à poignée arrière.
